# EUROPEAN PATENT APPLICATION

(11) **EP 4 521 279 A1**
(43) Date of publication of application: **12.03.2025**
(21) Application number: 24199017.5
(22) Date of filing: 06.09.2024
(51) Int. Cl.: G06F 21/57, G06N 20/00, H04L 9/40, G06F 21/56

(54) **METHOD, SYSTEM, AND COMPUTER PROGRAM PRODUCT FOR IDENTIFYING LIBRARY VULNERABILITIES**

(30) Priority: 08.09.2023 US 202363537299 P; 05.09.2024 US 202418825263
(71) Applicant: VISA INTERNATIONAL SERVICE ASSOCIATION, San Francisco, CA 94128-8999 (US)
(72) Inventor: UCHIL, Mrudul P, San Francisco, CA 94128 (US); DASTIDAR, Subhamoy Ghosh, San Francisco, CA 94128 (US); RAY, Randhir Kumar, San Francisco, CA 94128 (US)
(74) Representative: EIP

(57) **Abstract**

Methods, systems, and computer program products may obtain a library; obtain, from at least one external data source, information associated with at least one vulnerability associated with the library; generate, based on the information associated with at least one vulnerability associated with the library, at least one rule associated with the at least one vulnerability; train at least one machine learning model with the at least one rule associated with the at least one vulnerability; scan, based on the at least one rule associated with the at least one vulnerability, at least one application that uses the library to identify whether the at least one application includes the at least one vulnerability; and provide an indication of whether the at least one application that uses the library includes the at least one vulnerability.

## Description

### BACKGROUND

### 1. Technical Field

This disclosure relates generally to software libraries and, in some non-limiting embodiments or aspects, to methods, systems, and computer program products for identifying vulnerabilities in software libraries.

### 2. Technical Considerations

A supply chain attack, which may also be referred to as a value-chain attack or a third-party attack, occurs when a system is infiltrated via an outside partner or provider with access to the system. Supply chain attacks are an emerging threat that targets software developers and suppliers. A goal of supply chain attacks is to access source codes, build processes, and/or update mechanisms by infecting legitimate applications to distribute malware. For example, attackers may hunt for unsecure network protocols, unprotected server infrastructures, and/or unsafe coding practices, and the attackers may break in, change source codes, and/or hide malware in build and update processes. Because software is built and released by trusted vendors, these applications and updates are signed and certified. In software supply chain attacks, vendors are likely unaware that their applications or updates are infected with malicious code when they are released to the public, and the malicious code can run with the same trust and permissions as the application. As an example, in 2020, a hacking group gained access to SolarWinds' production environment and embedded a backdoor in updates to its Orion network monitoring product. SolarWinds customers running the malicious update suffered data breaches and other security incidents.

Vulnerabilities are typically identified in open-source libraries only by hackers or researchers, after which the applications embedding those libraries may be remediated by patching to the secure versions. However, there is a time window until the patching can be completed in which the applications remain vulnerable. Many times, this results in a severe data breach and, ultimately, financial loss, brand and reputation damage, and/or lost customers.

### SUMMARY

Accordingly, provided are improved systems, devices, products, apparatus, and/or methods for identifying library vulnerabilities.

According to non-limiting embodiments or aspects, provided is a method, including: obtaining, with at least one processor, a library; obtaining, with the at least one processor, from at least one external data source, information associated with at least one vulnerability associated with the library; generating, with the at least one processor, based on the information associated with at least one vulnerability associated with the library, at least one rule associated with the at least one vulnerability; training, with the at least one processor, at least one machine learning model, with the at least one rule associated with the at least one vulnerability; scanning, with the at least one processor, based on the at least one rule associated with the at least one vulnerability, at least one application that uses the library to identify whether the at least one application includes the at least one vulnerability; and providing, with the at least one processor, an indication of whether the at least one application that uses the library includes the at least one vulnerability.

In some non-limiting embodiments or aspects, the information associated with the at least one vulnerability includes at least one of the following: a name or identifier associated with the library, a vulnerability type associated with the at least one vulnerability, a description associated with the at least one vulnerability, a time of discovery associated with the at least one vulnerability, a complexity level associated with the at least one vulnerability, a code pattern associated with the at least one vulnerability, or any combination thereof.

In some non-limiting embodiments or aspects, obtaining, from the at least one external data source, the information associated with at least one vulnerability associated with the library includes: retrieving, with an Open Worldwide Application Security Project (OWASP) dependency check tool, the information associated with at least one vulnerability associated with the library.

In some non-limiting embodiments or aspects, obtaining, from the at least one external data source, the information associated with at least one vulnerability associated with the library includes: aggregating, from a plurality of websites, using a web crawler, the information associated with at least one vulnerability associated with the library.

In some non-limiting embodiments or aspects, obtaining, from the at least one external data source, the information associated with at least one vulnerability associated with the library includes: decompiling the library to generate source code associated with the library; and querying, based on the source code associated with the library, the at least one external data source for one or more code patterns associated with the source code.

In some non-limiting embodiments or aspects, scanning, based on the at least one rule associated with the at least one vulnerability, the at least one application that uses the library to identify whether the at least one application includes the at least one vulnerability includes: generating, based on the at least one rule, at least one dynamic application security testing (DAST) pattern; and scanning, using a DAST tool, the at least one application according to the at least one dynamic application security testing (DAST) pattern.

In some non-limiting embodiments or aspects, the method further includes: obtaining, with the at least one processor, further information associated with the library; providing, with the at least one processor, as input to the at least one machine learning model, the further information associated with the library, and receiving, as output from the at least one machine learning model, an indication as to whether one or more rules associated with one or more vulnerabilities associated with the further information associated with the library have already been generated; and in response to the indication that the one or more rules associated with the further information associated with the library have already been generated, with the at least one processor: scanning, based on the one or more rules, the at least one application that uses the library to identify whether the at least one application includes the one or more vulnerabilities; and providing a further indication of whether the at least one application that uses the library includes the one or more vulnerabilities.

According to non-limiting embodiments or aspects provided is a system, including: at least one processor coupled to a memory and configured to: obtain a library; obtain, from at least one external data source, information associated with at least one vulnerability associated with the library; generate, based on the information associated with at least one vulnerability associated with the library, at least one rule associated with the at least one vulnerability; train at least one machine learning model with the at least one rule associated with the at least one vulnerability; scan, based on the at least one rule associated with the at least one vulnerability, at least one application that uses the library to identify whether the at least one application includes the at least one vulnerability; and provide an indication of whether the at least one application that uses the library includes the at least one vulnerability.

In some non-limiting embodiments or aspects, the information associated with the at least one vulnerability includes at least one of the following: a name or identifier associated with the library, a vulnerability type associated with the at least one vulnerability, a description associated with the at least one vulnerability, a time of discovery associated with the at least one vulnerability, a complexity level associated with the at least one vulnerability, a code pattern associated with the at least one vulnerability, or any combination thereof.

In some non-limiting embodiments or aspects, the at least one processor is configured to obtain, from the at least one external data source, the information associated with at least one vulnerability associated with the library by: retrieving, with an Open Worldwide Application Security Project (OWASP) dependency check tool, the information associated with at least one vulnerability associated with the library.

In some non-limiting embodiments or aspects, the at least one processor is configured to obtain, from the at least one external data source, the information associated with at least one vulnerability associated with the library by: aggregating, from a plurality of websites, using a web crawler, the information associated with at least one vulnerability associated with the library.

In some non-limiting embodiments or aspects, the at least one processor is configured to obtain, from the at least one external data source, the information associated with at least one vulnerability associated with the library by: decompiling the library to generate source code associated with the library; and querying, based on the source code associated with the library, the at least one external data source for one or more code patterns associated with the source code.

In some non-limiting embodiments or aspects, the at least one processor is configured to scan, based on the at least one rule associated with the at least one vulnerability, the at least one application that uses the library to identify whether the at least one application includes the at least one vulnerability by: generating, based on the at least one rule, at least one dynamic application security testing (DAST) pattern; and scanning, using a DAST tool, the at least one application according to the at least one dynamic application security testing (DAST) pattern.

In some non-limiting embodiments or aspects, the at least one processor is further configured to: obtain further information associated with the library; provide as input to the at least one machine learning model, the further information associated with the library, and receiving, as output from the at least one machine learning model, an indication as to whether one or more rules associated with one or more vulnerabilities associated with the further information associated with the library have already been generated; and in response to the indication that the one or more rules associated with the further information associated with the library have already been generated: scan, based on the one or more rules, the at least one application that uses the library to identify whether the at least one application includes the one or more vulnerabilities; and provide a further indication of whether the at least one application that uses the library includes the one or more vulnerabilities.

According to non-limiting embodiments or aspects, provided is a computer program product including at least one non-transitory computer-readable medium including program instructions that, when executed by at least one processor, cause the at least one processor to: obtain a library; obtain, from at least one external data source, information associated with at least one vulnerability associated with the library; generate, based on the information associated with at least one vulnerability associated with the library, at least one rule associated with the at least one vulnerability; train at least one machine learning model with the at least one rule associated with the at least one vulnerability; scan, based on the at least one rule associated with the at least one vulnerability, at least one application that uses the library to identify whether the at least one application includes the at least one vulnerability; and provide an indication of whether the at least one application that uses the library includes the at least one vulnerability.

In some non-limiting embodiments or aspects, the information associated with the at least one vulnerability includes at least one of the following: a name or identifier associated with the library, a vulnerability type associated with the at least one vulnerability, a description associated with the at least one vulnerability, a time of discovery associated with the at least one vulnerability, a complexity level associated with the at least one vulnerability, a code pattern associated with the at least one vulnerability, or any combination thereof.

In some non-limiting embodiments or aspects, the program instructions, when executed by the at least one processor, cause the at least one processor to obtain, from the at least one external data source, the information associated with at least one vulnerability associated with the library by: retrieving, with an Open Worldwide Application Security Project (OWASP) dependency check tool, the information associated with at least one vulnerability associated with the library.

In some non-limiting embodiments or aspects, the program instructions, when executed by the at least one processor, cause the at least one processor to obtain, from the at least one external data source, the information associated with at least one vulnerability associated with the library by: aggregating, from a plurality of websites, using a web crawler, the information associated with at least one vulnerability associated with the library.

In some non-limiting embodiments or aspects, the program instructions, when executed by the at least one processor, cause the at least one processor to obtain, from the at least one external data source, the information associated with at least one vulnerability associated with the library by: decompiling the library to generate source code associated with the library; and querying, based on the source code associated with the library, the at least one external data source for one or more code patterns associated with the source code.

In some non-limiting embodiments or aspects, the program instructions, when executed by the at least one processor, cause the at least one processor to scan, based on the at least one rule associated with the at least one vulnerability, the at least one application that uses the library to identify whether the at least one application includes the at least one vulnerability by: generating, based on the at least one rule, at least one dynamic application security testing (DAST) pattern; and scanning, using a DAST tool, the at least one application according to the at least one dynamic application security testing (DAST) pattern.

In some non-limiting embodiments or aspects, the program instructions, when executed by the at least one processor, further cause the at least one processor to: obtain further information associated with the library; provide as input to the at least one machine learning model, the further information associated with the library, and receiving, as output from the at least one machine learning model, an indication as to whether one or more rules associated with one or more vulnerabilities associated with the further information associated with the library have already been generated; and in response to the indication that the one or more rules associated with the further information associated with the library have already been generated: scan, based on the one or more rules, the at least one application that uses the library to identify whether the at least one application includes the one or more vulnerabilities; and provide a further indication of whether the at least one application that uses the library includes the one or more vulnerabilities.

Further embodiments or aspects are set forth in the following numbered clauses:
Clause 1. A method, comprising: obtaining, with at least one processor, a library; obtaining, with the at least one processor, from at least one external data source, information associated with at least one vulnerability associated with the library; generating, with the at least one processor, based on the information associated with at least one vulnerability associated with the library, at least one rule associated with the at least one vulnerability; training, with the at least one processor, at least one machine learning model, with the at least one rule associated with the at least one vulnerability; scanning, with the at least one processor, based on the at least one rule associated with the at least one vulnerability, at least one application that uses the library to identify whether the at least one application includes the at least one vulnerability; and providing, with the at least one processor, an indication of whether the at least one application that uses the library includes the at least one vulnerability.
Clause 2. The method of clause 1, wherein the information associated with the at least one vulnerability includes at least one of the following: a name or identifier associated with the library, a vulnerability type associated with the at least one vulnerability, a description associated with the at least one vulnerability, a time of discovery associated with the at least one vulnerability, a complexity level associated with the at least one vulnerability, a code pattern associated with the at least one vulnerability, or any combination thereof.
Clause 3. The method of clause 1 or 2, wherein obtaining, from the at least one external data source, the information associated with at least one vulnerability associated with the library includes: retrieving, with an Open Worldwide Application Security Project (OWASP) dependency check tool, the information associated with at least one vulnerability associated with the library.
Clause 4. The method of any of clauses 1-3, wherein obtaining, from the at least one external data source, the information associated with at least one vulnerability associated with the library includes: aggregating, from a plurality of websites, using a web crawler, the information associated with at least one vulnerability associated with the library.
Clause 5. The method of any of clauses 1-4, wherein obtaining, from the at least one external data source, the information associated with at least one vulnerability associated with the library includes: decompiling the library to generate source code associated with the library; and querying, based on the source code associated with the library, the at least one external data source for one or more code patterns associated with the source code.
Clause 6. The method of any of clauses 1-5, wherein scanning, based on the at least one rule associated with the at least one vulnerability, the at least one application that uses the library to identify whether the at least one application includes the at least one vulnerability includes: generating, based on the at least one rule, at least one dynamic application security testing (DAST) pattern; and scanning, using a DAST tool, the at least one application according to the at least one DAST pattern.
Clause 7. The method of any of clauses 1-6, further comprising: obtaining, with the at least one processor, further information associated with the library; and providing, with the at least one processor, as input to the at least one machine learning model, the further information associated with the library, and receiving, as output from the at least one machine learning model, an indication as to whether one or more rules associated with one or more vulnerabilities associated with the further information associated with the library have already been generated; and in response to the indication that the one or more rules associated with the further information associated with the library have already been generated, with the at least one processor: scanning, based on the one or more rules, the at least one application that uses the library to identify whether the at least one application includes the one or more vulnerabilities; and providing a further indication of whether the at least one application that uses the library includes the one or more vulnerabilities.
Clause 8. A system, comprising: at least one processor coupled to a memory and configured to: obtain a library; obtain, from at least one external data source, information associated with at least one vulnerability associated with the library; generate, based on the information associated with at least one vulnerability associated with the library, at least one rule associated with the at least one vulnerability; train at least one machine learning model with the at least one rule associated with the at least one vulnerability; scan, based on the at least one rule associated with the at least one vulnerability, at least one application that uses the library to identify whether the at least one application includes the at least one vulnerability; and provide an indication of whether the at least one application that uses the library includes the at least one vulnerability.
Clause 9. The system of clause 8, wherein the information associated with the at least one vulnerability includes at least one of the following: a name or identifier associated with the library, a vulnerability type associated with the at least one vulnerability, a description associated with the at least one vulnerability, a time of discovery associated with the at least one vulnerability, a complexity level associated with the at least one vulnerability, a code pattern associated with the at least one vulnerability, or any combination thereof.
Clause 10. The system of clause 8 or 9, wherein the at least one processor is configured to obtain, from the at least one external data source, the information associated with at least one vulnerability associated with the library by: retrieving, with an Open Worldwide Application Security Project (OWASP) dependency check tool, the information associated with at least one vulnerability associated with the library.
Clause 11. The system of any of clauses 8-10, wherein the at least one processor is configured to obtain, from the at least one external data source, the information associated with at least one vulnerability associated with the library by: aggregating, from a plurality of websites, using a web crawler, the information associated with at least one vulnerability associated with the library.
Clause 12. The system of any of clauses 8-11, wherein the at least one processor is configured to obtain, from the at least one external data source, the information associated with at least one vulnerability associated with the library by: decompiling the library to generate source code associated with the library; and querying, based on the source code associated with the library, the at least one external data source for one or more code patterns associated with the source code.
Clause 13. The system of any of clauses 8-12, wherein the at least one processor is configured to scan, based on the at least one rule associated with the at least one vulnerability, the at least one application that uses the library to identify whether the at least one application includes the at least one vulnerability by: generating, based on the at least one rule, at least one dynamic application security testing (DAST) pattern; and scanning, using a DAST tool, the at least one application according to the at least one DAST pattern.
Clause 14. The system of any of clauses 8-13, wherein the at least one processor is further configured to: obtain further information associated with the library; and provide as input to the at least one machine learning model, the further information associated with the library, and receiving, as output from the at least one machine learning model, an indication as to whether one or more rules associated with one or more vulnerabilities associated with the further information associated with the library have already been generated; and in response to the indication that the one or more rules associated with the further information associated with the library have already been generated: scan, based on the one or more rules, the at least one application that uses the library to identify whether the at least one application includes the one or more vulnerabilities; and provide a further indication of whether the at least one application that uses the library includes the one or more vulnerabilities.
Clause 15. A computer program product comprising at least one non-transitory computer-readable medium including program instructions that, when executed by at least one processor, cause the at least one processor to: obtain a library; obtain, from at least one external data source, information associated with at least one vulnerability associated with the library; generate, based on the information associated with at least one vulnerability associated with the library, at least one rule associated with the at least one vulnerability; train at least one machine learning model with the at least one rule associated with the at least one vulnerability; scan, based on the at least one rule associated with the at least one vulnerability, at least one application that uses the library to identify whether the at least one application includes the at least one vulnerability; and provide an indication of whether the at least one application that uses the library includes the at least one vulnerability.
Clause 16. The computer program product of clause 15, wherein the information associated with the at least one vulnerability includes at least one of the following: a name or identifier associated with the library, a vulnerability type associated with the at least one vulnerability, a description associated with the at least one vulnerability, a time of discovery associated with the at least one vulnerability, a complexity level associated with the at least one vulnerability, a code pattern associated with the at least one vulnerability, or any combination thereof.
Clause 17. The computer program product of clause 15 or 16, wherein the program instructions, when executed by the at least one processor, cause the at least one processor to obtain, from the at least one external data source, the information associated with at least one vulnerability associated with the library by: retrieving, with an Open Worldwide Application Security Project (OWASP) dependency check tool, the information associated with at least one vulnerability associated with the library.
Clause 18. The computer program product of any of clauses 15-17, wherein the program instructions, when executed by the at least one processor, cause the at least one processor to obtain, from the at least one external data source, the information associated with at least one vulnerability associated with the library by: aggregating, from a plurality of websites, using a web crawler, the information associated with at least one vulnerability associated with the library.
Clause 19. The computer program product of any of clauses 15-18, wherein the program instructions, when executed by the at least one processor, cause the at least one processor to obtain, from the at least one external data source, the information associated with at least one vulnerability associated with the library by: decompiling the library to generate source code associated with the library; and querying, based on the source code associated with the library, the at least one external data source for one or more code patterns associated with the source code.
Clause 20. The computer program product of any of clauses 15-19, wherein the program instructions, when executed by the at least one processor, cause the at least one processor to scan, based on the at least one rule associated with the at least one vulnerability, the at least one application that uses the library to identify whether the at least one application includes the at least one vulnerability by: generating, based on the at least one rule, at least one dynamic application security testing (DAST) pattern; and scanning, using a DAST tool, the at least one application according to the at least one DAST pattern.
Clause 21. The computer program product of any of clauses 15-20, wherein the program instructions, when executed by the at least one processor, further cause the at least one processor to: obtain further information associated with the library; and provide as input to the at least one machine learning model, the further information associated with the library, and receiving, as output from the at least one machine learning model, an indication as to whether one or more rules associated with one or more vulnerabilities associated with the further information associated with the library have already been generated; and in response to the indication that the one or more rules associated with the further information associated with the library have already been generated: scan, based on the one or more rules, the at least one application that uses the library to identify whether the at least one application includes the one or more vulnerabilities; and provide a further indication of whether the at least one application that uses the library includes the one or more vulnerabilities.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

Additional advantages and details are explained in greater detail below with reference to the non-limiting, exemplary embodiments that are illustrated in the accompanying schematic figures, in which:
FIG. 1 is a schematic diagram of an electronic payment processing network, according to some non-limiting embodiments or aspects;
FIG. 2 is a schematic diagram of example components of one or more devices of FIG. 1, according to some non-limiting embodiments or aspects;
FIGS. 3A and 3B are a flow diagram of a method for identifying library vulnerabilities, according to some non-limiting embodiments or aspects;
FIG. 4 illustrates an example vulnerability rule, according to non-limiting embodiments or aspects; and
FIG. 5 illustrates an example application vulnerability report, according to non-limiting embodiments or aspects.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects of the disclosed subject matter. Hence, specific dimensions and other physical characteristics related to the embodiments or aspects disclosed herein are not to be considered as limiting.

Some non-limiting embodiments or aspects are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

As used herein, the term "communication" may refer to the reception, receipt, transmission, transfer, provision, and/or the like of data (e.g., information, signals, messages, instructions, commands, and/or the like). For one unit (e.g., a device, a system, a component of a device or system, combinations thereof, and/or the like) to be in communication with another unit means that the one unit is able to directly or indirectly receive information from and/or transmit information to the other unit. This may refer to a direct or indirect connection (e.g., a direct communication connection, an indirect communication connection, and/or the like) that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively transmit information to the second unit. As another example, a first unit may be in communication with a second unit if at least one intermediary unit processes information received from the first unit and communicates the processed information to the second unit. In some non-limiting embodiments or aspects, a message may refer to a network packet (e.g., a data packet and/or the like) that includes data. It will be appreciated that numerous other arrangements are possible.

As used herein, the term "computing device" may refer to one or more electronic devices configured to process data. A computing device may, in some examples, include the necessary components to receive, process, and output data, such as a processor, a display, a memory, an input device, a network interface, and/or the like. A computing device may be a mobile device. As an example, a mobile device may include a cellular phone (e.g., a smartphone or standard cellular phone), a portable computer, a wearable device (e.g., watches, glasses, lenses, clothing, and/or the like), a personal digital assistant (PDA), and/or other like devices. A computing device may also be a desktop computer or other form of non-mobile computer.

As used herein, the term "server" may refer to or include one or more computing devices that are operated by or facilitate communication and processing for multiple parties in a network environment, such as the Internet, although it will be appreciated that communication may be facilitated over one or more public or private network environments and that various other arrangements are possible. Further, multiple computing devices (e.g., servers, point-of-sale (POS) devices, mobile devices, etc.) directly or indirectly communicating in the network environment may constitute a "system."

As used herein, the term "system" may refer to one or more computing devices or combinations of computing devices (e.g., processors, servers, client devices, software applications, components of such, and/or the like). Reference to "a device," "a server," "a processor," and/or the like, as used herein, may refer to a previously-recited device, server, or processor that is recited as performing a previous step or function, a different device, server, or processor, and/or a combination of devices, servers, and/or processors. For example, as used in the specification and the claims, a first device, a first server, or a first processor that is recited as performing a first step or a first function may refer to the same or different device, server, or processor recited as performing a second step or a second function.

Application owners typically ignore supply chain risks. If a cyber researcher exploits an open source or an attacker or hacker exploits a vulnerability in a system, a Common Vulnerability & Exposures (CVE) may be published. System owners may only try to figure out a solution to mitigate the risk after the CVE is published and rated as Critical/High. This is a reactive approach to address the problem, which leaves open a large timeframe for hackers or attackers to steal and/or misuse core intellectual property and data. However, we are proposing a significantly different and proactive approach here.

Non-limiting embodiments or aspects of the present disclosure provide a significantly different and proactive approach to address this problem. Non-limiting embodiments or aspects of the present disclosure provide methods, systems, and/or computer program products that obtain a library; obtain, from at least one external data source, information associated with at least one vulnerability associated with the library; generate, based on the information associated with at least one vulnerability associated with the library, at least one rule associated with the at least one vulnerability; train at least one machine learning model with the at least one rule associated with the at least one vulnerability; scan, based on the at least one rule associated with the at least one vulnerability, at least one application that uses the library to identify whether the at least one application includes the at least one vulnerability; and provide an indication of whether the at least one application that uses the library includes the at least one vulnerability.

In this way, non-limiting embodiments or aspects of the present disclosure may reduce and/or eliminate open attack surfaces and vulnerabilities for applications going to production, reduce and/or eliminate a risk of data breaches, CVEs, and cyber threats much earlier in the time before application goes to production, protect brand reputation, protect customers and/or safeguard against financial loss, and/or provide remediation from software supply chain risk problems. Moreover, non-limiting embodiments or aspects of the present disclosure may provide integration of continually improved scan patterns into a DAST tool for enhancing security assessments and continuous improvement of generated scanning patterns. For example, non-limiting embodiments or aspects of the present disclosure may provide a tangible improvement in software security practices by enabling more effective detection of vulnerabilities based on dynamically generated rules through enhancing security of applications through systematic scanning.

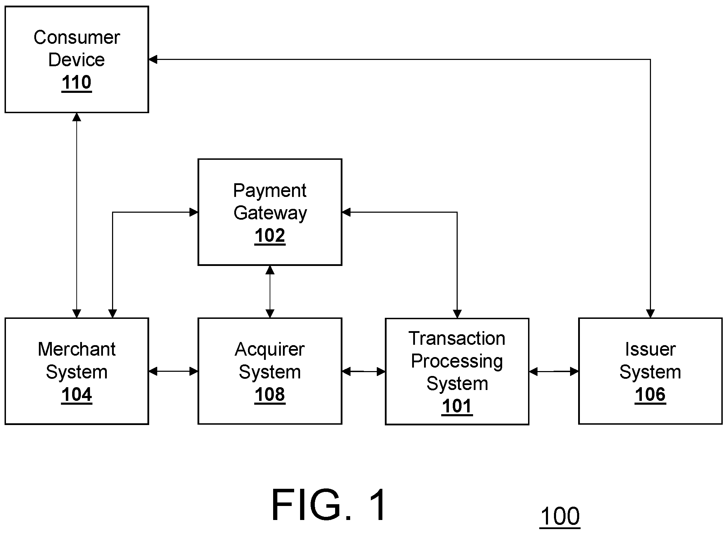

Referring now to FIG. 1, FIG. 1 shows an electronic payment processing network 100 according to non-limiting embodiments or aspects. The payment processing network may be used in conjunction with the systems and methods described herein. It will be appreciated that the particular arrangement of electronic payment processing network 100 shown is for example purposes only, and that various arrangements are possible. Transaction processing system 101 (e.g., a transaction handler) is shown to be in communication with one or more issuer systems (e.g., such as issuer system 106) and one or more acquirer systems (e.g., such as acquirer system 108). Although only a single issuer system 106 and single acquirer system 108 are shown, it will be appreciated that transaction processing system 101 may be in communication with a plurality of issuer systems and/or acquirer systems. In some embodiments, transaction processing system 101 may also operate as an issuer system such that both transaction processing system 101 and issuer system 106 are a single system and/or controlled by a single entity.

In some non-limiting embodiments or aspects, transaction processing system 101 may communicate with merchant system 104 directly through a public or private network connection. Additionally, or alternatively, transaction processing system 101 may communicate with merchant system 104 through payment gateway 102 and/or acquirer system 108. In some non-limiting embodiments or aspects, an acquirer system 1108 associated with merchant system 104 may operate as payment gateway 102 to facilitate the communication of transaction requests from merchant system 104 to transaction processing system 101. Merchant system 104 may communicate with payment gateway 102 through a public or private network connection. For example, a merchant system 104 that includes a physical POS device may communicate with payment gateway 102 through a public or private network to conduct card-present transactions. As another example, a merchant system 104 that includes a server (e.g., a web server) may communicate with payment gateway 102 through a public or private network, such as a public Internet connection, to conduct card-not-present transactions.

In some non-limiting embodiments or aspects, transaction processing system 101, after receiving a transaction request from merchant system 104 that identifies an account identifier of a payor (e.g., such as an account holder) associated with an issued payment device 110, may generate an authorization request message to be communicated to the issuer system 106 that issued the payment device 110 and/or account identifier. Issuer system 106 may then approve or decline the authorization request and, based on the approval or denial, generate an authorization response message that is communicated to transaction processing system 101. Transaction processing system 101 may communicate an approval or denial to merchant system 104. When issuer system 106 approves the authorization request message, it may then clear and settle the payment transaction between the issuer system 106 and acquirer system 108.

The number and arrangement of systems and devices shown in FIG. 1 are provided as an example. There may be additional systems and/or devices, fewer systems and/or devices, different systems and/or devices, and/or differently arranged systems and/or devices than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of system 100 may perform one or more functions described as being performed by another set of systems or another set of devices of system 100.

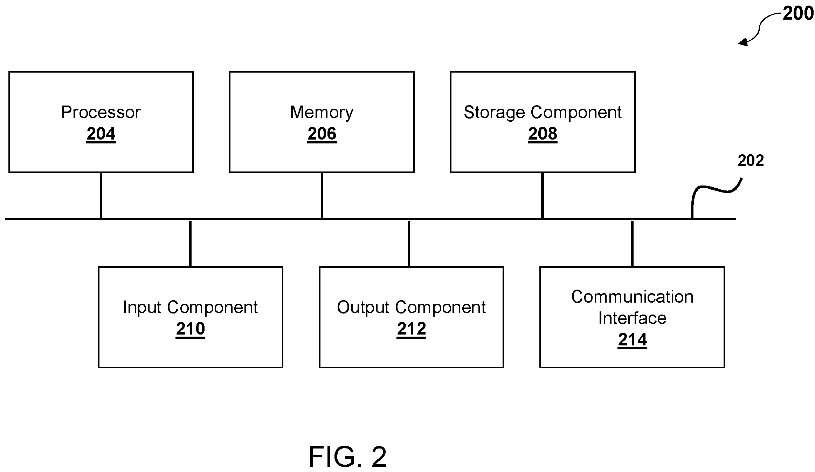

Referring now to FIG. 2, shown is a diagram of example components of a device 200 according to non-limiting embodiments. Device 200 may correspond to transaction processing system 101, payment gateway 102, merchant system 104, issuer system 106, acquirer system 108, and/or consumer device 110, as an example. In some non-limiting embodiments, such systems or devices may include at least one device 200 and/or at least one component of device 200. The number and arrangement of components shown are provided as an example. In some non-limiting embodiments, device 200 may include additional components, fewer components, different components, or differently arranged components than those shown. Additionally, or alternatively, a set of components (e.g., one or more components) of device 200 may perform one or more functions described as being performed by another set of components of device 200.

As shown in FIG. 2, device 200 may include a bus 202, a processor 204, memory 206, a storage component 208, an input component 210, an output component 212, and a communication interface 214. Bus 202 may include a component that permits communication among the components of device 200. In some non-limiting embodiments, processor 204 may be implemented in hardware, firmware, or a combination of hardware and software. For example, processor 204 may include a processor (e.g., a central processing unit (CPU), a graphics processing unit (GPU), an accelerated processing unit (APU), etc.), a microprocessor, a digital signal processor (DSP), and/or any processing component (e.g., a field-programmable gate array (FPGA), an application-specific integrated circuit (ASIC), etc.) that can be programmed to perform a function. Memory 206 may include random access memory (RAM), read only memory (ROM), and/or another type of dynamic or static storage device (e.g., flash memory, magnetic memory, optical memory, etc.) that stores information and/or instructions for use by processor 204.

With continued reference to FIG. 2, storage component 208 may store information and/or software related to the operation and use of device 200. For example, storage component 208 may include a hard disk (e.g., a magnetic disk, an optical disk, a magneto-optic disk, a solid-state disk, etc.) and/or another type of computer-readable medium. Input component 210 may include a component that permits device 200 to receive information, such as via user input (e.g., a touch screen display, a keyboard, a keypad, a mouse, a button, a switch, a microphone, etc.). Additionally, or alternatively, input component 210 may include a sensor for sensing information (e.g., a global positioning system (GPS) component, an accelerometer, a gyroscope, an actuator, etc.). Output component 212 may include a component that provides output information from device 200 (e.g., a display, a speaker, one or more light-emitting diodes (LEDs), etc.). Communication interface 214 may include a transceiver-like component (e.g., a transceiver, a separate receiver and transmitter, etc.) that enables device 200 to communicate with other devices, such as via a wired connection, a wireless connection, or a combination of wired and wireless connections. Communication interface 214 may permit device 200 to receive information from another device and/or provide information to another device. For example, communication interface 214 may include an Ethernet interface, an optical interface, a coaxial interface, an infrared interface, a radio frequency (RF) interface, a universal serial bus (USB) interface, a Wi-Fi^{®} interface, a cellular network interface, and/or the like.

Device 200 may perform one or more processes described herein. Device 200 may perform these processes based on processor 204 executing software instructions stored by a computer-readable medium, such as memory 206 and/or storage component 208. A computer-readable medium may include any non-transitory memory device. A memory device includes memory space located inside of a single physical storage device or memory space spread across multiple physical storage devices. Software instructions may be read into memory 206 and/or storage component 208 from another computer-readable medium or from another device via communication interface 214. When executed, software instructions stored in memory 206 and/or storage component 208 may cause processor 204 to perform one or more processes described herein. Additionally, or alternatively, hardwired circuitry may be used in place of or in combination with software instructions to perform one or more processes described herein. Thus, embodiments described herein are not limited to any specific combination of hardware circuitry and software. The term "configured to," as used herein, may refer to an arrangement of software, device(s), and/or hardware for performing and/or enabling one or more functions (e.g., actions, processes, steps of a process, and/or the like). For example, "a processor configured to" may refer to a processor that executes software instructions (e.g., program code) that cause the processor to perform one or more functions.

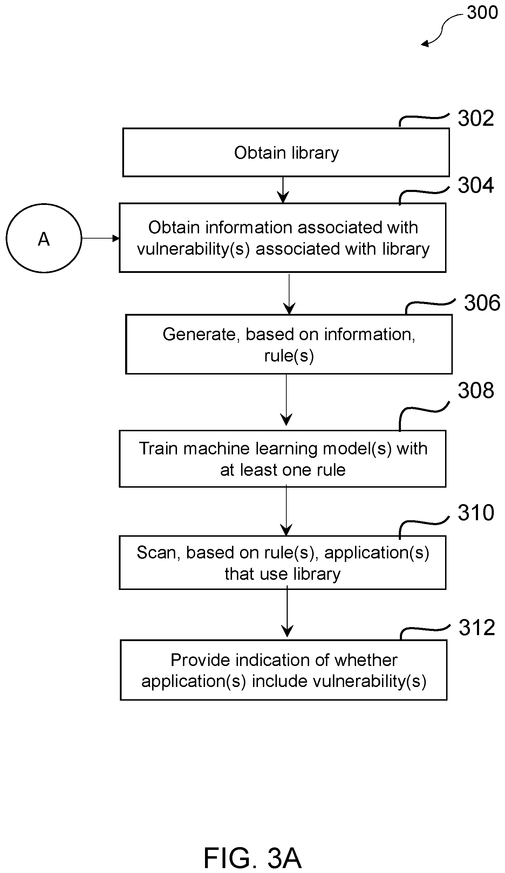

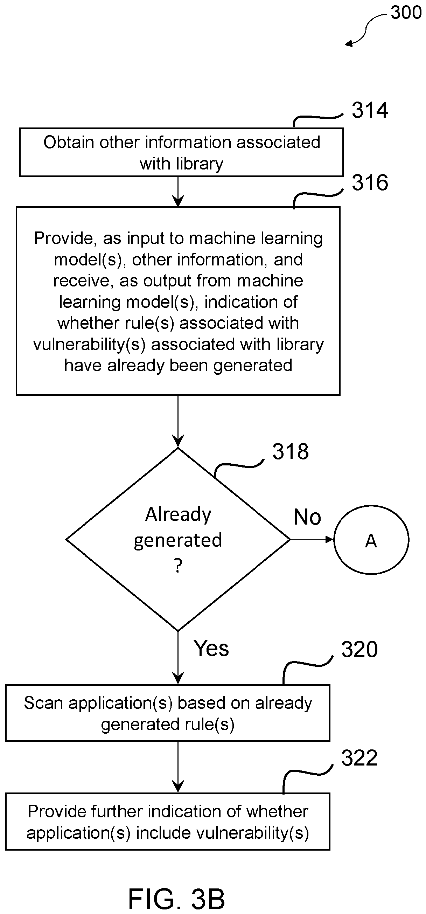

Referring now to FIGS. 3A and 3B, shown is a flow diagram for a method 300 for identifying library vulnerabilities, according to some non-limiting embodiments or aspects. The steps shown in FIGS. 3A and 3B are for example purposes only. It will be appreciated that additional, fewer, different, and/or a different order of steps may be used in some non-limiting embodiments or aspects. In some non-limiting embodiments or aspects, a step may be automatically performed in response to performance and/or completion of a prior step.

As shown in FIG. 3A, at step 302, method 300 includes obtaining a library. For example, transaction processing system 101 may obtain a library (e.g., a software library, a Java Archive (JAR) file including the software library, etc.). As an example, transaction processing system 101 may include, implement, and/or access a database (e.g., an artifactory database, etc.) that stores a plurality of software libraries, such as open-source libraries embedded or used by applications granted or to be granted software roles and/or permissions associated with transaction processing system 101. Each software library may be associated with a version or release, and their may be multiple versions or releases of the same software library. A non-limiting example of a software library is Apache Log4j, which is a versatile, industrial-grade open-source Java logging library developed by the Apache Foundation and composed of an API, its implementation, and components to assist the deployment for various use cases, and of which there are multiple releases or versions (e.g., Apache Log4j 2.12.4, Apache Log4j 2.23.1, etc.).

As shown in FIG. 3A, at step 304, method 300 includes obtaining, from at least one external data source, information associated with at least one vulnerability associated with the library. For example, transaction processing system 101 may obtain, from at least one external data source, information associated with at least one vulnerability associated with the library.

In some non-limiting embodiments or aspects, information associated with the at least one vulnerability associated with the library includes at least one of the following: a name or identifier associated with the library (e.g., a unique identifier associated with a particular release or version of the library, a vulnerability type associated with the at least one vulnerability, a description associated with the at least one vulnerability, a time of discovery associated with the at least one vulnerability, a complexity level associated with the at least one vulnerability, a code pattern associated with the at least one vulnerability, or any combination thereof.

In some non-limiting embodiments or aspects, transaction processing system 101 obtains, from the at least one external data source, the information associated with at least one vulnerability associated with the library by: retrieving, with an Open Worldwide Application Security Project (OWASP) dependency check tool, the information associated with at least one vulnerability associated with the library. For example, transaction processing system 101 may aggregate information associated with open vulnerabilities and CVEs from data sources or database such as the OWASP Top 10, the Mitre CVE program, the National Institute of Standards and Technology (NIST) National Vulnerability Database (NVD), and/or the like.

In some non-limiting embodiments or aspects, transaction processing system 101 obtains, from the at least one external data source, the information associated with at least one vulnerability associated with the library by: aggregating, from a plurality of websites, using a web crawler, the information associated with at least one vulnerability associated with the library. For example, transaction processing system 101 may access current industry trend cyberattack related web sites and other internet sources to do web crawling in order to fetch and match to curated vulnerabilities and attack vectors on top analyzed common dataset.

In some non-limiting embodiments or aspects, transaction processing system 101 obtains, from the at least one external data source, the information associated with at least one vulnerability associated with the library by: decompiling the library to generate source code associated with the library; and querying, based on the source code associated with the library, the at least one external data source for one or more code patterns associated with the source code.

Transaction processing system 101 may aggregate information associated with open vulnerabilities and CVEs from multiple different data sources or databases and/or websites. Transaction processing system 101 may apply data analytics to the aggregated information such that different data models may be resolved into a common set of attack vectors. As an example, transaction processing system 101 may mine the aggregated information to consolidate types of vulnerabilities and determine trending attacks. In such an example, transaction processing system 101 may collate the information using word cloud associations, keywords, tags, code patterns, and/or the like. In such an example, transaction processing system 101 may compare one or more code patterns in the source code of the library to code patterns associated with vulnerabilities identified in the aggregated information to identify vulnerabilities in the software library. Non-limiting examples of types of vulnerabilities include overflow vulnerabilities, memory corruption vulnerabilities, SQL Injection vulnerabilities, directory traversal file vulnerabilities, inclusion vulnerabilities, input validation vulnerabilities, and the like.

As shown in FIG. 3A, at step 306, method 300 includes generating, based on the information associated with at least one vulnerability associated with the library, at least one rule associated with the at least one vulnerability. For example, transaction processing system 101 may generate, based on the information associated with at least one vulnerability associated with the library, at least one rule associated with the at least one vulnerability. As an example, transaction processing system 101 may generate curated vulnerability rules and dynamic simulation attack patterns (e.g., correlate the generated vulnerability rules with known attack patterns documented in cybersecurity literature, etc.) to be scanned and tested against open-source libraries in an artifactory database. As an example, a rule associated with a vulnerability may include one or more conditions that, when satisfied, indicate that a library includes the vulnerability.

In some non-limiting embodiments or aspects, transaction processing system 101 may employ one or more pattern searching algorithms to analyze the information associated with at least one vulnerability associated with the library (e.g., to analyze the aggregated CVE and vulnerability data, etc.). For example, transaction processing system 101 may clean the information to remove any duplicate entries, irrelevant information, or noise that could hinder the pattern searching process and/or standardize formats for consistency. The dataset may be normalized to ensure uniformity in the representation of vulnerabilities, making it easier to compare patterns across various CVE records and the like, which may include converting descriptions into a standard text format or categorizing vulnerabilities into predefined classes (e.g., buffer overflow, SQL injection, etc.). Transaction processing system 101 may extract attributes from each identified vulnerability, such as the affected library version, type of vulnerability, affected system components, and associated threat vectors, and/or transaction processing system 101 may use natural language processing (NLP) techniques to analyze the textual descriptions of vulnerabilities. The pattern searching algorithms applied by transaction processing system 101 may include statistical analysis, clustering algorithms, and/or association rule learning to identify patterns in the information, and/or the identified patterns may be validated by cross-referencing the identified patterns with existing vulnerability databases, threat intelligence feeds, and historical attack data to ensure that the identified patterns reflect actual risk scenarios.

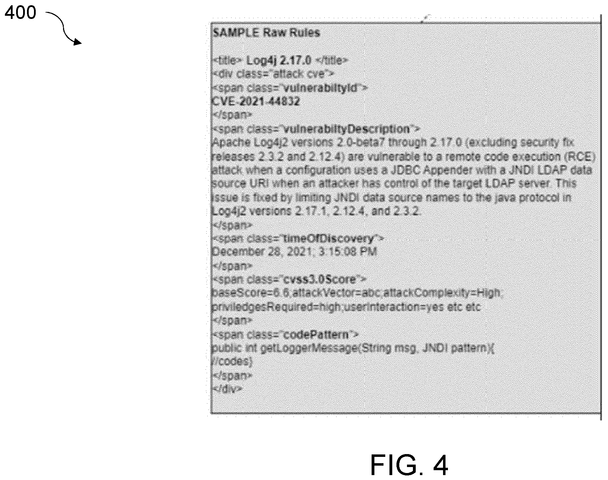

Transaction processing system 101 may generate, based on the validated patterns, structured vulnerability rules. Each rule may specify conditions under which a software library may be vulnerable, defining parameters such as library versions, coding practices, environmental contexts, and/or the like to be monitored. The rules may be encoded in a standard format (e.g., a rule-based language as shown in FIG. 4) to make the vulnerability rules more easily interpretable and actionable for automated security tools and vulnerability scanners. The pattern searching algorithm may be configured to adapt to new data as the CVE databases and/or vulnerability websites are updated, ensuring continuous learning and improvement in detecting evolving vulnerabilities. Accordingly, non-limiting embodiments or aspects of the present disclosure may provide a comprehensive and iterative process that leverages a mix of statistical techniques, machine learning algorithms, and expert analysis to identify and validate patterns inherent in CVE and vulnerability data, which enables the generation of actionable vulnerability rules that enhance the understanding of risks associated with software libraries, ultimately bolstering security measures against potential attacks.

As shown in FIG. 3A, at step 308, method 300 includes training at least one machine learning model with the at least one rule associated with the at least one vulnerability. For example, transaction processing system 101 may train at least one machine learning model with the at least one rule associated with the at least one vulnerability. As an example, transaction processing system 101 may provide, as input to the at least one machine learning model, the at least one rule associated with the at least one vulnerability, and receive, as output from the at least one machine learning model, an indication as to whether a scan pattern and/or one or more rules associated with one or more vulnerabilities associated with the information associated with the library have already been generated. In such an example, transaction processing system 101 may modify or update one or more parameters of the at least one machine learning model according to an objective function that depends on the output of the at least one machine learning model and/or at least one label associated with the at least one rule. In this way, the at least one machine learning model may learn and/or save a scan pattern associated with the at least one rule associated with the at least one vulnerability.

Transaction processing system 101 may use the structured vulnerability rules generated from the analysis of the information associated with the at least one vulnerability to train and update the machine learning model. Each rule may inform the model about the conditions under which specific vulnerabilities may occur, incorporating attributes such as library versions, function calls, security practices, and environmental dependencies. A training dataset may include historical scan results, vulnerability rule outcomes, and/or labeled data indicating whether a vulnerability was successfully exploited in a real-world context, and the training dataset may be continually or periodically updated based on new or updated information aggregated from the external data sources. The machine learning model (e.g., a neural network, etc.) may be configured create scan patterns that automate the detection of library vulnerabilities across applications that integrate or import the open-source libraries. For example, the machine learning model may be trained on the training dataset and continually or periodically updated based on the new or updated information aggregated from the external data sources to associate the structured vulnerability rules with patterns found in the library code that either lead to vulnerabilities or signify secure coding practices and generate unique scan patterns based on the learned representations of the vulnerability rules. The scan patterns outline how to scrutinize code more effectively based on historical exploitation characteristics of open-source libraries.

Furthermore, as each scan is performed, the machine learning model may learn from the results, continuously curating and enhancing its capabilities to accurately identify vulnerabilities and provide actionable security findings. For example, the machine learning model may be trained on the structured vulnerability rules used as input features and security findings (e.g., whether a vulnerability was patched or still requires a fix, etc.) may form the output. The machine learning model may learn to correlate patterns in the input data with the outcomes. Using the insights gained during training, the machine learning model may generate unique scan patterns that can effectively identify vulnerabilities in applications, and these patterns may encode the conditions outlined by the structured vulnerability rules, reflecting real-world deployment scenarios of libraries. Transaction processing system 101 may apply the machine learning model to continually or periodically generate new and/or updated scan patterns from new or updated analysis of the information associated with the at least one vulnerability to ensure that scanning is current with point in time industry trends for cyber-attacks. As an example, a feedback mechanism may be integrated with the machine learning model wherein real-world attack data is fed back into the machine learning model to refine the pattern searching and rule generation processes, enhancing the accuracy and relevance of the vulnerability predictions over time. Accordingly, instead of being static, results from scans as described herein below may form a feedback loop where each detected vulnerability or false positive is analyzed to refine the vulnerability rules and scan patterns, and as more scans are executed and as new vulnerabilities are revealed in the CVE database, the machine learning model may iteratively refines itself, continuously curating and enhancing both scan patterns and attack vectors for more accurate results.

As shown in FIG. 3A, at step 310, method 300 includes scanning, based on the at least one rule associated with the at least one vulnerability, at least one application that uses the library to identify whether the at least one application includes the at least one vulnerability. For example, transaction processing system 101 may scan, based on the at least one rule associated with the at least one vulnerability, at least one application that uses the library to identify whether the at least one application includes the at least one vulnerability. As an example, the generated scan patterns from the machine learning model may be integrated into automated scanning tools (e.g., DAST, etc.) to facilitate the systematic scanning of applications for vulnerabilities.

In some non-limiting embodiments or aspects, transaction processing system 101 may scan, based on the at least one rule associated with the at least one vulnerability, the at least one application that uses the library to identify whether the at least one application includes the at least one vulnerability by: generating, based on the at least one rule, at least one dynamic application security testing (DAST) pattern; and scanning, using a DAST tool, the at least one application according to the at least one dynamic application security testing (DAST) pattern. For example, for DAST tools, scan patterns can be integrated as attack profiles or scan templates that the tools can execute during application runtime. Many DAST tools provide APIs for integration with application environments. Generated scan patterns can be programmatically loaded and executed through these APIs, making use of the latest rules defined by the security model.

As previously described, transaction processing system 101 may provide a feedback mechanism by which the results from scans are fed back into the machine learning model to update the scan patterns dynamically based on results of the scans (e.g., false positives, newly discovered vulnerabilities, etc.). In some implementations, transaction processing system 101 may maintain version control for the scan patterns by creating an audit trail that records how the scan patterns evolve and how they impact the vulnerability detection process over time.

Accordingly, by integrating generated scan patterns into automated scanning tools such as DAST, or the like, non-limiting embodiments or aspects of the present disclosure may significantly enhance vulnerability detection capabilities in an efficient and systematic manner and enable cybersecurity teams to proactively identify and remediate vulnerabilities within applications utilizing open-source libraries, thereby strengthening overall application security and reducing the risk of exploitation. Moreover, the continuous cycle of scanning, learning, and updating may ensure that security practices can keep pace with evolving threats in the software development landscape.

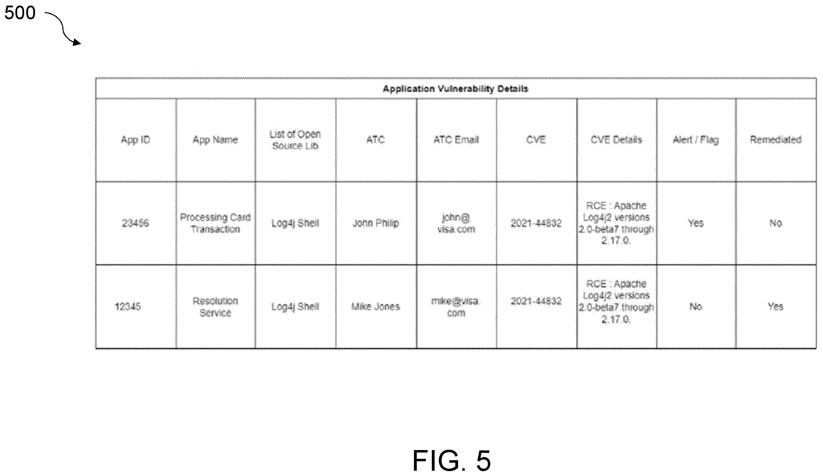

As shown in FIG. 3A, at step 312, method 300 includes providing, an indication of whether the at least one application that uses the library includes the at least one vulnerability. For example, transaction processing system 101 may provide, an indication of whether the at least one application that uses the library includes the at least one vulnerability. As an example, an automated scanning tool (e,g., a DAST tool, etc.) may apply the generated scan patterns in real-time as the automated scanning tool interacts with the running application by simulating attacks based on known vulnerabilities to reveal security flaws often missed by static analyses. After a scan, the automated scanning tool may generate a report that details identified vulnerabilities, their severity, potential exploit paths, and specific locations in the code that need remediation. For example, FIG. 5 illustrates an example application vulnerability report 500 that may be generated by transaction processing system 101. In some non-limiting embodiments or aspects, transaction processing system 101 may provide a user interface for security analysts to visualize vulnerability rules and attack patterns. The user interface may provide for user queries and filters, thereby enabling users to focus on specific software components or environment conditions.

In some implementations, providing the indication may include storing the report in a location of a storage device for subsequent retrieval (e.g., in a memory of ultrasonic flow sensor 150, in a memory of flow sensory system, in a database etc.), transmitting the report directly to a recipient via at least one wired or wireless communication medium, transmitting or storing a reference to the report, and the like. The providing at step 312 may additionally or alternatively include encoding, decoding, encrypting, decrypting, validating, verifying, and the like via a hardware element. For example, after a scan is completed, the report (e.g., an internal CVE/list of vulnerabilities, etc.) may be provided and verified by Cybersecurity SMEs. If the CVEs are indeed found to be true and exploitable, application owners may be requested to remediate those vulnerable components in their application codebase either by fixing the code or by patching the libraries to secured versions. All these activities can happen before applications can be promoted to production. Hence, this will significantly reduce or completely avoid any exploitation / data breach that can happen in or via those applications when they are internet facing and in production.

Accordingly, by integrating generated scan patterns into automated scanning tools, non-limiting embodiments or aspects of the present disclosure may provide a more robust approach to systematically identify and remediate vulnerabilities in applications. This integration not only enhances the capabilities of automated scanning tools but also establishes a dynamic system for continuous improvement in security assessment processes, ultimately leading to more secure applications that leverage open-source components. By enabling detailed, context-sensitive analysis and fostering a loop of learning and adaptation, non-limiting embodiments or aspects of the present disclosure may better safeguard their applications against evolving security threats.

As shown in FIG. 3B, at step 314, method 300 includes obtaining further information associated with the library. For example, transaction processing system 101 may obtain further information associated with the library (e.g., a name and/or identifier of the library, the library itself, the library source code, etc.). As an example, transaction processing system 101 may obtain a request to check with the machine learning model whether the machine learning model has learned and/or stored any scan patterns and/or rules associated with the library and/or vulnerabilities of the library. As an example, transaction processing system 101 may obtain, from at least one external data source, further information associated with at least one vulnerability associated with the library. In such an example, the further information associated with at least one vulnerability associated with the library may include new or updated information associated with the at least one vulnerability or one or more new vulnerabilities.

As shown in FIG. 3B, at step 316, method 300 includes providing as input to the at least one machine learning model, the further information associated with the library, and receiving, as output from the at least one machine learning model, an indication as to whether one or more scan patterns and/or one or more rules associated with one or more vulnerabilities associated with the further information associated with the library have already been generated. For example, transaction processing system 101 may provide, as input to the at least one machine learning model, the further information associated with the library, and receive, as output from the at least one machine learning model, an indication as to whether one or more scan patterns and/or one or more rules associated with one or more vulnerabilities associated with the further information associated with the library have already been generated.

As shown in FIG. 3B, at step 318, method 300 includes determining whether one or more scan patterns and/or one or more rules associated with one or more vulnerabilities associated with the further information associated with the library have already been generated. For example, transaction processing system 101 may determine whether one or more scan patterns and/or one or more rules associated with one or more vulnerabilities associated with the further information associated with the library have already been generated.

As shown in FIG. 3B, in response to determining that one or more rules associated with one or more vulnerabilities associated with the further information associated with the library have not already been generated at step 318 of FIG. 3B, processing may return to step 304 of FIG. 3A to obtain information associated with at least one vulnerability associated with the library. For example, transaction processing system 101 may, in response to determining that one or more rules associated with one or more vulnerabilities associated with the further information associated with the library have not already been generated at step 318 of FIG. 3B, return processing to step 304 of FIG. 3A to obtain information associated with at least one vulnerability associated with the library.

As shown in FIG. 3B, at step 320, method 300 includes, in response to the indication that the one or more scan patterns and/or the one or more rules associated with the further information associated with the library have already been generated, scanning, based on the one or more rules, the at least one application that uses the library to identify whether the at least one application includes the one or more vulnerabilities. For example, transaction processing system 101 may, in response to the indication that the one or more scan patterns and/or the one or more rules associated with the further information associated with the library have already been generated, scan, based on the one or more rules, the at least one application that uses the library to identify whether the at least one application includes the one or more vulnerabilities. As an example, transaction processing system 101 may perform scanning as described herein with respect to step 310 of FIG. 3.

As shown in FIG. 3B, at step 320, method 300 includes providing a further indication of whether the at least one application that uses the library includes the one or more vulnerabilities. For example, transaction processing system 101 may provide a further indication of whether the at least one application that uses the library includes the one or more vulnerabilities. As an example, transaction processing system 101 may provide a further indication as described herein with respect to step 312 of FIG. 3.

Aspects described include artificial intelligence or other operations whereby the system processes inputs and generates outputs with apparent intelligence. The artificial intelligence may be implemented in whole or in part by a model. A model may be implemented as a machine learning model. The learning may be supervised, unsupervised, reinforced, or a hybrid learning whereby multiple learning techniques are employed to generate the model. The learning may be performed as part of training. Training the model may include obtaining a set of training data and adjusting characteristics of the model to obtain a desired model output. For example, three characteristics may be associated with a desired item location. In such instance, the training may include receiving the three characteristics as inputs to the model and adjusting the characteristics of the model such that for each set of three characteristics, the output device state matches the desired device state associated with the historical data.

In some implementations, the training may be dynamic. For example, the system may update the model using a set of events. The detectable properties from the events may be used to adjust the model.

The model may be an equation, artificial neural network, recurrent neural network, convolutional neural network, decision tree, or other machine-readable artificial intelligence structure. The characteristics of the structure available for adjusting during training may vary based on the model selected. For example, if a neural network is the selected model, characteristics may include input elements, network layers, node density, node activation thresholds, weights between nodes, input or output value weights, or the like. If the model is implemented as an equation (e.g., regression), the characteristics may include weights for the input parameters, thresholds, or limits for evaluating an output value, or criterion for selecting from a set of equations.

Once a model is trained, retraining may be included to refine or update the model to reflect additional data or specific operational conditions. The retraining may be based on one or more signals detected by a device described herein or as part of a method described herein. Upon detection of the designated signals, the system may activate a training process to adjust the model as described.

Further examples of machine learning and modeling features which may be included in the embodiments discussed above are described in "A survey of machine learning for big data processing" by Qiu et al. in EURASIP Journal on Advances in Signal Processing (2016) which is hereby incorporated by reference in its entirety.

Although embodiments have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect.

## Claims

1. A method, comprising:
obtaining, with at least one processor, a library;
obtaining, with the at least one processor, from at least one external data source, information associated with at least one vulnerability associated with the library;
generating, with the at least one processor, based on the information associated with at least one vulnerability associated with the library, at least one rule associated with the at least one vulnerability;
training, with the at least one processor, at least one machine learning model, with the at least one rule associated with the at least one vulnerability;
scanning, with the at least one processor, based on the at least one rule associated with the at least one vulnerability, at least one application that uses the library to identify whether the at least one application includes the at least one vulnerability; and
providing, with the at least one processor, an indication of whether the at least one application that uses the library includes the at least one vulnerability.

2. The method of claim 1, wherein the information associated with the at least one vulnerability includes at least one of the following: a name or identifier associated with the library, a vulnerability type associated with the at least one vulnerability, a description associated with the at least one vulnerability, a time of discovery associated with the at least one vulnerability, a complexity level associated with the at least one vulnerability, a code pattern associated with the at least one vulnerability, or any combination thereof.

3. The method of claim 1 or claim 2, wherein obtaining, from the at least one external data source, the information associated with at least one vulnerability associated with the library includes:
retrieving, with an Open Worldwide Application Security Project (OWASP) dependency check tool, the information associated with at least one vulnerability associated with the library.

4. The method of any preceding claim, wherein obtaining, from the at least one external data source, the information associated with at least one vulnerability associated with the library includes:
aggregating, from a plurality of websites, using a web crawler, the information associated with at least one vulnerability associated with the library.

5. The method of any preceding claim, wherein obtaining, from the at least one external data source, the information associated with at least one vulnerability associated with the library includes:
decompiling the library to generate source code associated with the library; and
querying, based on the source code associated with the library, the at least one external data source for one or more code patterns associated with the source code.

6. The method of any preceding claim, wherein scanning, based on the at least one rule associated with the at least one vulnerability, the at least one application that uses the library to identify whether the at least one application includes the at least one vulnerability includes:
generating, based on the at least one rule, at least one dynamic application security testing (DAST) pattern; and
scanning, using a DAST tool, the at least one application according to the at least one DAST pattern.

7. The method of any preceding claim, further comprising:
obtaining, with the at least one processor, further information associated with the library; and
providing, with the at least one processor, as input to the at least one machine learning model, the further information associated with the library, and receiving, as output from the at least one machine learning model, an indication as to whether one or more rules associated with one or more vulnerabilities associated with the further information associated with the library have already been generated; and
in response to the indication that the one or more rules associated with the further information associated with the library have already been generated, with the at least one processor:
scanning, based on the one or more rules, the at least one application that uses the library to identify whether the at least one application includes the one or more vulnerabilities; and
providing a further indication of whether the at least one application that uses the library includes the one or more vulnerabilities.

8. A system, comprising:
at least one processor coupled to a memory and configured to:
obtain a library;
obtain, from at least one external data source, information associated with at least one vulnerability associated with the library;
generate, based on the information associated with at least one vulnerability associated with the library, at least one rule associated with the at least one vulnerability;
train at least one machine learning model with the at least one rule associated with the at least one vulnerability;
scan, based on the at least one rule associated with the at least one vulnerability, at least one application that uses the library to identify whether the at least one application includes the at least one vulnerability; and
provide an indication of whether the at least one application that uses the library includes the at least one vulnerability.

9. The system of claim 8, wherein the information associated with the at least one vulnerability includes at least one of the following: a name or identifier associated with the library, a vulnerability type associated with the at least one vulnerability, a description associated with the at least one vulnerability, a time of discovery associated with the at least one vulnerability, a complexity level associated with the at least one vulnerability, a code pattern associated with the at least one vulnerability, or any combination thereof.

10. The system of claim 8 or claim 9, wherein the at least one processor is configured to obtain, from the at least one external data source, the information associated with at least one vulnerability associated with the library by:
retrieving, with an Open Worldwide Application Security Project (OWASP) dependency check tool, the information associated with at least one vulnerability associated with the library.

11. The system of any of claims 8 to 10, wherein the at least one processor is configured to obtain, from the at least one external data source, the information associated with at least one vulnerability associated with the library by:
aggregating, from a plurality of websites, using a web crawler, the information associated with at least one vulnerability associated with the library.

12. The system of any of claims 8 to 11, wherein the at least one processor is configured to obtain, from the at least one external data source, the information associated with at least one vulnerability associated with the library by:
decompiling the library to generate source code associated with the library; and
querying, based on the source code associated with the library, the at least one external data source for one or more code patterns associated with the source code.

13. The system of any of claims 8 to 12, wherein the at least one processor is configured to scan, based on the at least one rule associated with the at least one vulnerability, the at least one application that uses the library to identify whether the at least one application includes the at least one vulnerability by:
generating, based on the at least one rule, at least one dynamic application security testing (DAST) pattern; and
scanning, using a DAST tool, the at least one application according to the at least one DAST pattern.

14. The system of any of claims 8 to 13, wherein the at least one processor is further configured to:
obtain further information associated with the library; and
provide as input to the at least one machine learning model, the further information associated with the library, and receiving, as output from the at least one machine learning model, an indication as to whether one or more rules associated with one or more vulnerabilities associated with the further information associated with the library have already been generated; and
in response to the indication that the one or more rules associated with the further information associated with the library have already been generated:
scan, based on the one or more rules, the at least one application that uses the library to identify whether the at least one application includes the one or more vulnerabilities; and
provide a further indication of whether the at least one application that uses the library includes the one or more vulnerabilities.

15. A computer program product comprising at least one non-transitory computer-readable medium including program instructions that, when executed by at least one processor, cause the at least one processor to perform the method according to any one of claims 1 to 7.
